# EUROPÄISCHE PATENTSCHRIFT

(11) **EP 1 789 687 B1**
(45) Veröffentlichungstag und Bekanntmachung des Hinweises auf die Patenterteilung: **02.01.2008**
(21) Anmeldenummer: 05782731.3
(22) Anmeldetag: 10.09.2005
(51) Int. Cl.: F16C 33/06, F16C 33/12, F16C 33/62

(54) **LAGERVORRICHTUNG**
BEARING DEVICE
DISPOSITIF DE PALIER

(30) Priorität: 17.09.2004 EP 04405594
(43) Veröffentlichungstag der Anmeldung: 30.05.2007
(73) Patentinhaber: ThyssenKrupp Metalúrgica Campo Limpo Ltda., 13231- 900 Campo Limpo Paulista SP (BR)
(72) Erfinder: GUERREIRO, Sergio, Stefano, 18017-550 Sorocaba-SP (BR); BARBEZAT, Gérard, CH-8404 Winterthur (CH)
(74) Vertreter: Adams, Steffen
(86) Internationale Anmeldenummer: PCT/EP2005/009757
(87) Internationale Veröffentlichungsnummer: WO 2006/029785

(56) Entgegenhaltungen:
- WO-A-99/06722
- WO-A-20/04067793
- WO-A-20/05042993
- AT-B- 397 985
- US-A- 3 891 287
- US-A- 4 666 318
- US-A1- 2001 021 353
- PATENT ABSTRACTS OF JAPAN Bd. 012, Nr. 064 (M-672), 26. Februar 1988 (1988-02-26) & JP 62 209222 A (EGURO TEKKOSHO:KK), 14. September 1987 (1987-09-14)

## Beschreibung

Die Erfindung betrifft eine Lagervorrichtung gemäß dem Oberbegriff des unabhängigen Anspruchs 1.

Gleit- und Wälzlager nehmen in der Technik den überwiegenden Anteil von eingesetzten Lagern ein. Unter dem Begriff Lager sind im Folgenden alle, die Funktion des Lagers definierenden, aufeinander abrollenden bzw. abgleitenden Teile zu verstehen.

Mit der an den aufeinander wälzenden und / oder gleitenden Lagerlaufflächen entstehenden Reibung in der Regel verbunden sind Verschleißerscheinungen, besonders an den Lagerlaufflächen. Damit diese Verschleißerscheinungen nicht einen Wechsel der kompletten Lagervorrichtung nötig machen, werden unter anderem bei Gleitlagern Lagerschalen verwendet, die nach ihrer Abnutzung ausgetauscht werden können. Dadurch wird allerdings der konstruktive Aufbau des Gleitlagers wesentlich verkompliziert und mit dem Auswechseln der Lagerschalen wird außerdem ein kostenintensiver Wartungsprozess nötig.

Zum Lagern von Kurbelwellen und Pleuelstangen in Verbrennungsmotoren werden zum Beispiel häufig Gleitlager, insbesondere geteilte Gleitlager mit Lagerschalen verwendet. Teilweise findet auch die kombinierte Lagerung in Gleit- und Wälzlagern Anwendung. Die Kurbelwellen sind in der Regel aus geschmiedeten Stählen oder Gusseisen mit Kugelgraphit, Stahl-, Temperguss oder Sinterwerkstoffen hergestellt. Die Lagerschalen sind meistens als so genannte Zwei- oder Dreischichtlager realisiert. Allerdings ist die Herstellung solcher Lagerschalen relativ aufwendig. Bei hohen Laufleistungen der Maschine nutzen sich die Lagerschalen schließlich doch soweit ab, dass das Wechseln der Lagerschalen nötig wird. Das Wechseln der Lagerschalen in solchen Maschinen ist, wie oben schon erwähnt wurde, mit hohen Kosten verbunden.

Aus der US 3,891,287 ist eine Lagervorrichtung gemäß dem Oberbegriff des Patentanspruchs 1 bekannt, nämlich ein Kurbelwellenzapfen mit einem darauf gelagerten Pleuelauge. Zwischen den Lagerpartnem ist eine Lagerschale angeordnet, die eine Lagerfläche aus Blei oder Zinn aufweist. Der Kurbelwellenzapfen ist mit einer dünnen Schicht aus Kupfer versehen. Die vorstehend in Bezug auf die Lagerschalen erwähnten Nachteile bestehen auch bei dieser bekannten Lagervorrichtung.

Die Aufgabe der Erfindung ist es daher, eine verbesserte Lagervorrichtung vorzuschlagen, welche in ihrer Konstruktion einfach ist, mit welcher der Wartungsaufwand deutlich reduziert und die Lebensdauer der Lagervorrichtung wesentlich verlängert wird.

Die diese Aufgaben in apparativer Hinsicht lösenden Gegenstände der Erfindung sind durch die Merkmale des unabhängigen Anspruchs 1 gekennzeichnet. Die abhängigen Ansprüche beziehen sich auf besonders vorteilhafte Ausführungsformen der Erfindung.

Die Erfindung betrifft somit eine Lagervorrichtung mit einem ersten Lagerteil und einem zweiten Lagerteil, die in lagerndem Kontakt zusammenwirken, wobei das erste Lagerteil und das zweite Lagerteil jeweils mit einer Oberflächenschicht versehen ist, wobei die Härte der Oberflächenschicht des ersten Lagerteils größer ist als die Härte der Oberflächenschicht des zweiten Lagerteils, und wobei die Oberflächenschicht des ersten Lagerteils eine eisenhaltige Oberflächenschicht ist, welche mindestens folgende Zusammensetzung aufweist:
Kohlenstoff = 0.1 % bis 1.5% Gewichts-Prozent
Mangan = 0.1 % bis 8% Gewichts-Prozent
Schwefel = 0.1 % bis 2% Gewichts-Prozent
Kupfer = 0.1 % bis 12% Gewichts-Prozent
Eisen = Differenz auf 100% Gewichts-Prozent .

Unter lagerndem Kontakt ist zu verstehen, dass sich das erste und das zweite Lagerteil aufeinander gleitend oder wälzend bewegen oder z.B. ruhend ineinander gelagert sind. Wenn im Rahmen dieser Anmeldung davon gesprochen wird, dass die Lagerteile eine Oberflächenschicht aufweisen, ist gemeint, dass die Lagerteile jeweils eine Lagerfläche oder Lauffläche aufweisen und diese Lager- bzw. Laufflächen mit einer durch thermisches Spritzen aufgebrachten Oberflächenschicht versehen sind. Die Laufflächen des ersten und des zweiten Lagerteils sind die Flächen, mit denen die beiden Lagerteile in lagerndem Kontakt stehen.

Mit der unterschiedlich harten Beschichtung der zwei Lagerteile ist es jetzt möglich, diese in Bezug auf ihre Gleiteigenschaften optimal zu gestalten und dabei einerseits den konstruktiven Aufwand der Lagervorrichtung gegenüber dem Stand der Technik zu minimieren und andererseits die Lebensdauer der Lagervorrichtung deutlich zu erhöhen. So können jetzt z.B. die Lagerschalen weggelassen werden, d.h. die zwei Lagerteile können direkt in lagernden Kontakt gebracht werden.

Durch diese spezielle Wahl und Anordnung der unterschiedlich harten Oberflächenschichten wird erreicht, dass unter anderem der Reibwiderstand zwischen den zwei Lagerteilen minimiert wird und die Neigung der beiden Lagerteile zum adhäsiven Verschleiß bzw. zum Fressen, auch Scuffing genannt, praktisch ausbleibt.

Es hat sich gezeigt, dass, wenn Oberflächenschichten mit ähnlicher Härte aufeinander abgleiten, kommt es in der Regel zu erhöhtem Verschleiß. Dies beruht darauf, dass z.B. bei relativ harten Oberflächenschichten keine der beiden Schichten eine genügend hohe Duktilität besitzt, um die auftretenden, zum Teil sehr großen mechanischen Spannungen durch Verformung, insbesondere plastische Verformung, abzubauen. Als Folge davon werden die Teile der beiden Oberflächen, welche die mechanischen Spannungen verursachen, abgetragen, insbesondere können sie ausbrechen.

Des Weiteren hat sich gezeigt, dass, wenn zwei relativ weiche Oberflächenschichten aufeinander abgleiten, entsteht in der Regel in hohem Maße Reibung und Reibungswärme. Die Reibung entsteht, indem, gegeben durch die relativ hohe Duktilität der beiden Oberflächenschichten, diese sich unter einem Anpressdruck so verformen, dass sie mit einem relativ großen Anteil ihrer gesamten Lauf- oder Lagerfläche aufeinander reiben. Weiterhin ist die Neigung von weichen Oberflächenschichten zum aneinander Haften zumeist größer als bei harten Oberflächenschichten. Aufgrund dieser Eigenschaften der beiden Oberflächenschichten werden z.B. beim aufeinander Gleiten der Schichten Teile der Oberfläche herausgerissen, was wieder erhöhten Verschleiß, im extremen Fall Fressen bedeutet.

Es ist eine wesentliche Erkenntnis der vorliegenden Erfindung, dass, wenn eine relativ harte Oberflächenschicht über eine relativ weiche Oberflächenschicht gleitet oder wälzt, wie es bei der erfindungsgemäßen Lagervorrichtung der Fall ist, die oben genannten Verschleißprozesse weitestgehend ausbleiben. Die harte Oberflächenschicht führt in der weichen Oberflächenschicht zu Spannungen, die diese aber durch ihre relativ hohe Duktilität abbauen kann und durch die sie demzufolge nicht beschädigt wird. Da die harte Oberflächenschicht kaum an der weichen Oberflächenschicht haftet, werden aus dieser auch nahezu keine Oberflächenbestandteile herausgerissen. Und durch die relativ geringe Härte der weichen Oberflächenschicht bringt diese nicht die nötigen Kräfte auf, um die harte Schicht zu schädigen.

Ein weiterer Vorteil der speziellen Art und Anordnung der Oberflächenschichten im Rahmen der erfindungsgemäßen Lagervorrichtung ist, dass die Lagervorrichtung im Gegensatz zu den aus dem Stand der Technik bekannten Lagervorrichtungen unempfindlich gegenüber eventuell auftretenden Verunreinigungen ist. Diese Verunreinigungen sind zum Beispiel kleine Festkörperpartikel, die z.B. aber nicht nur bei Nass- bzw. Flüssigkeitsschmierung, insbesondere Ölschmierung zusammen mit dem Öl zwischen die Laufflächen der beiden Lagerteile gelangen. Bei den aus dem Stand der Technik bekannten Lagervorrichtungen kommt es durch diese Verunreinigungen z.B. zum Zerkratzen der Laufflächen der Lagervorrichtung, was zu einem erhöhten Verschleiß und damit zum vorzeitigen Ausfall der Lagervorrichtung führt. In der erfindungsgemäßen Lagervorrichtung werden diese Verunreinigungen in bestimmte Bereiche in einer oder in beiden Oberflächenschichten eingebettet und können die Oberflächen, respektive Oberflächenschichten der Laufflächen der beiden Lagerteile daher nicht mehr schädigen.

Um zusätzlich eine Schädigung der Laufflächen der beiden Lagerteile auszuschließen, wird die Oberflächenschicht auf dem Grundmaterial des ersten Lagerteils besonders hart ausgestaltet, wenn die Lauffläche des zweiten Lagerteils die weiche Oberflächenschicht aufweist. Mit Grundmaterial ist im Rahmen dieser Anmeldung das Trägermaterial der Oberflächenschicht gemeint, z.B. das Material einer Kurbelwelle an der Lagerstelle.

Durch die Paarung einer möglichst harten mit einer relativ weichen Oberflächenschicht auf jeweils einer Lagerteil - Lauffläche werden optimale Lagerergebnisse in Bezug auf Reibungsminimierung und Verschleißfestigkeit der Lagervorrichtung erreicht.

Welches Lagerteil mit welcher Oberflächenschicht versehen wird, ist von den konkreten Anforderungen an die Lagervorrichtung abhängig. Zum Beispiel kann es empfehlenswert sein, das Lagerteil, welches einfacher auszuwechseln ist, mit der weicheren Oberflächenschicht zu versehen, da diese Oberflächenschicht sich in der Regel früher abnutzt als die harte Oberflächenschicht. Allerdings ist die Lebensdauer der relativ weichen Oberflächenschicht immer noch um ein Vielfaches größer als die eines vergleichbaren Elements aus dem Stand der Technik, wie zum Beispiel die einer Lagerschale.

Natürlich gibt es noch viele andere Gesichtspunkte, die bei der Wahl der Beschichtungen eine Rolle spielen können.

Im Folgenden werden die Oberflächenschichten näher erläutert. Die relativ weiche Kupferbasisschicht weist folgende Zusammensetzung auf:
Zink = 5% bis 30% Gewichtsprozent
Zinn = 1 % bis 10% Gewichtsprozent
Silizium = 0.1 % bis 3% Gewichtsprozent
Aluminium = 0.1 % bis 7% Gewichtsprozent
Eisen = 0.01 % bis 2% Gewichtsprozent
Mangan = 0.01 % bis 4% Gewichtsprozent
Kobalt = 0.01 % bis 3% Gewichtsprozent
Kupfer = Differenz auf 100% Gewichtsprozent.

Im Folgenden wird für den Begriff Kupferbasisschicht auch der Begriff kupferhaltige Oberflächenschicht verwendet.

Die Eisenbasisschicht weist folgende Zusammensetzung auf:
Kohlenstoff = 0.1 % bis 1.5% Gewichtsprozent
Mangan = 0.1 % bis 8% Gewichtsprozent
Schwefel = 0.1 % bis 2% Gewichtsprozent
Kupfer = 0.1 % bis 12% Gewichtsprozent
Eisen = Differenz auf 100% Gewichtsprozent.

Im Folgenden wird für den Begriff Eisenbasisschicht auch der Begriff eisenhaltige Oberflächenschicht verwendet.

Zunächst soll nachfolgend die eisenhaltige Oberflächenschicht sowie deren Eigenschaften erläutert werden.

In einem Ausführungsbeispiel ist die erfindungsgemäße Lagervorrichtung so ausgestaltet, dass die eisenhaltige Oberflächenschicht zusätzlich 0.01 % bis 0.2% Gewichtsprozent Phosphor enthält. Phosphor verbessert erheblich die mechanische Festigkeit der Oberflächenschicht und erhöht damit deren Verschleißfestigkeit.

In einem weiteren Ausführungsbeispiel ist die Lagervorrichtung mit einer eisenhaltigen Oberflächenschicht versehen, die zusätzlich 0.1% bis 20% Gewichtsprozent Molybdän und / oder zusätzlich 5% bis 20% Gewichts-prozent Chrom enthält. Insbesondere die Anwesenheit von Chrom und Molybdän in der Oberflächenschicht erhöht entscheidend deren Korrosionsfestigkeit, z.B. gegenüber aggressiven Stoffe, die z.B. in einem Schmiermittel zum Schmieren eines Lagers enthalten sein können oder beim Betrieb einer Brennkraftmaschine entstehen oder auf andere Weise an die beschichtete Oberfläche gelangen.

Um die Trockenschmierungs - Eigenschaften der eisenhaltigen Oberflächenschicht zu verbessern, ist in einem weiteren Ausführungsbeispiel die Lagervorrichtung so ausgestaltet, dass die eisenhaltige Oberflächenschicht MnS als Trockenschmierstoff enthält und der Mangan-Anteil zwischen 1 % und 2.5% Gewichtsprozent, bevorzugt bei 1.7% Gewichtsprozent liegt und der Schwefelanteil zwischen 0.5% und 1.5% Gewichtsprozent, bevorzugt bei 1 % Gewichtsprozent liegt.

Um die guten Laufeigenschaften, z.B. Gleiteigenschaften, der eisenhaltigen Oberflächenschicht weiter zu erhöhen, ist in einem anderen Ausführungsbeispiel die Lagervorrichtung derart gestaltet, dass die eisenhaltige Oberflächenschicht eine Grundmatrix aus α - Eisen aufweist.

Weiterhin kann die Lagervorrichtung derart ausgestaltet werden, dass die eisenhaltige Oberflächenschicht Karbide, insbesondere FeₓC_{y}, bevorzugt Fe₃C enthält. Diese Karbide erhöhen wesentlich die mechanische Festigkeit der Oberflächenschicht. Die feinen Karbidkörner behindern das Wandern von Versetzungen in der Oberflächenschicht und stabilisieren diese dadurch mechanisch.

Um bessere Eigenschaften der Lagervorrichtung in Bezug auf die Empfindlichkeit gegen Schmutz zu erreichen, um also die Lebensdauer der Lagervorrichtung zu erhöhen, wird die eisenhaltige Oberflächenschicht derart gestaltet, dass sie Kupferausscheidungen aufweist, die weichere getrennte Phasen als eine Kupfermatrix bilden. Diese Kupferausscheidungen haben eine gute Einbettfähigkeit gegenüber kleinen Schmutzpartikeln, deren Größe im Mikrometerbereich, z.B. bei 1 µm liegen kann. Durch diese Einbettung der Schmutzpartikel in die Kupferausscheidungen wird z.B. die Gefahr einer Beschädigung der Oberflächen oder der allgemein als "Fressen" bekannte Vorgang vermieden.

Die Bereiche, welche die Kupferausscheidungen enthalten, haben eine relativ geringe Härte und können so insbesondere harte Fremdkörper, die zwischen die Lagerteile des Lagers gelangen, aufnehmen. Das passiert, indem die Fremdkörper in die Bereiche mit den Kupferausscheidungen eingedrückt, respektive eingebettet werden. Dadurch werden die Oberflächen der Lagerteile vor Beschädigungen durch die harten Fremdkörper geschützt. Das heißt, die Kupferausscheidungen filtern sozusagen die harten Fremdkörper heraus, d.h. die Fremdkörper werden dauerhaft in den kupferhaltigen Ausscheidungen eingelagert.

Wie bereits erläutert, weist die eisenhaltige Oberflächenschicht isolierte Phasen aus Kupfer auf, die entsprechend räumlich isolierte Bereiche aus Kupfer bilden. Diese Kupferausscheidungen bilden relativ weiche Bereiche, das heißt Bereiche mit geringer Härte, in der ansonsten verhältnismäßig harten eisenhaltigen Schicht. Die Härte dieser Bereiche aus bzw. mit Kupfer kann dabei zum Beispiel zwischen 80 HV und 200 HV, wobei HV wie üblich Vickers Härte bedeutet, und bevorzugt ca. 100 HV betragen, während die eisenhaltige Schicht in Bereichen ohne Kupferausscheidungen Härten zwischen 300 HV und 500 HV, bevorzugt eine Härte von ca. 400 HV haben kann.

Besonders vorteilhaft ist daher z.B. die Oberflächenschicht eines der Lagerteilen einer nassgeschmierten Lagervorrichtung, wie z.B. die Kurbelwelle einer Brennkraftmaschine und / oder die mit ihr in lagerndem Kontakt stehende Pleuelstange und / oder der Lagersattel für die Kurbelwelle mit einer eisenhaltigen Oberflächenschicht versehen. Solche Lager sind in der Regel mit einem Schmieröl geschmiert, das Verschmutzungen aller Art, wie z.B. Abrieb, der an den verschiedensten Stellen in der Brennkraftmaschine entstehen kann, enthalten kann. Zwar sind häufig entsprechende Filtervorrichtungen vorgesehen, wie etwa der Ölfilter in einem Benzin- oder Dieselmotor eines Kraftfahrzeugs, jedoch können damit nur Teilchen ab einer bestimmten Größe wirksam aus dem Schmiermittel gefiltert werden. Insbesondere kleinere Teilchen im Mikrometerbereich werden nicht oder nur unzureichend heraus gefiltert, sodass sie z.B. zwischen die in lagerndem Kontakt stehenden Teile der Kurbelwelle gelangen und dort auf Dauer zur Schädigung dieser Lager führen. Sind die entsprechenden Oberflächen jedoch mit einer eisenhaltigen Oberflächenschicht mit Kupferausscheidungen versehen, werden die schädlichen Verschmutzungen in den weichen Kupferausscheidungen der Oberflächenschicht im Betrieb des Lagers eingelagert, sodass die in lagerndem Kontakt stehenden Oberflächen durch die Verschmutzungen, also die Schmutzteilchen, nicht mehr geschädigt werden.

Im Folgenden werden nunmehr die Eigenschaften der kupferhaltigen Oberflächenschicht, die eine geringere Härte als die eisenhaltige Oberflächenschicht hat, eingehend beschrieben.

In einem für die Praxis besonders bevorzugten Ausführungsbeispiel besteht die kupferhaltige Oberflächenschicht aus einer Grundmatrix aus α - Kupfer. Diese Matrix bildet einen relativ weichen Grundwerkstoff für die Oberflächenschicht mit besonders guten Eigenschaften, insbesondere gute Gleiteigenschaften.

In einem anderen bevorzugten Ausführungsbeispiel ist die Lagervorrichtung so ausgestaltet, dass die kupferhaltige Oberflächenschicht zusätzlich 0.01 % bis 1 % Gewichtsprozent Titan enthält. Mit der Zugabe von Titan kann die Härte der Oberflächenschicht in bestimmten Grenzen verändert werden, was notwendig ist, z.B. um die Paarung der eisenhaltigen und der kupferhaltigen Oberflächenschichten optimal aufeinander abzustimmen.

Um die guten Laufeigenschaften der Lagerteile der Lagervorrichtung sicherzustellen, wird die Lagervorrichtung z.B. so ausgestaltet, dass die kupferhaltige Oberflächenschicht Ausscheidungen von Eisen und / oder Kobalt und /oder Mangan und / oder Silizium aufweist. Diese Stoffe bilden Hartphasen in der mengenmäßig vom Kupfer dominierten Oberflächenschicht. Diese Hartphasen bilden relativ harte Bereiche, d.h. Bereiche mit hoher Härte in der ansonsten verhältnismäßig weichen kupferhaltigen Schicht. Die Härte dieser Hartphasen kann dabei zwischen 300 HV und 500 HV, bevorzugt bei 400 HV liegen, wobei HV wie üblich Vickers Härte bedeutet. Die kupferhaltige Grundmatrix kann dabei eine Härte zwischen 80 und 200 HV, bevorzugt 100 HV, haben.

Bei Nass- oder Flüssigkeitsschmierung, insbesondere Ölschmierung der Lagervorrichtung ist es wichtig, dass das Schmiermittel, also etwa das Öl, gut zwischen die zwei Laufflächen der Lagerteile transportiert wird. Dies wird unter anderem dadurch erreicht, dass die eisenhaltige, und / oder die kupferhaltige Oberflächenschicht jeweils eine Porosität von 0.5% bis 5% Volumen-prozent, insbesondere zwischen 1 % und 3% aufweist. Das Öl dringt in die Poren ein und wird mit ihnen über die Lauffläche transportiert. D.h. die Poren wirken wie Vorratstaschen, in denen sich genug Öl, respektive Schmiermittel, befindet, um auch unter schwierigen Schmierbedingungen die Schmierung der Lagerteile sicherzustellen.

Mindestens einer der beiden Oberflächenschichten, also entweder die eisenhaltige oder die kupferhaltige oder beide, werden bevorzugt nach ihrem Aufbringen auf die Laufflächen der Lagerteile nachbearbeitet. Dabei hat sich herausgestellt, dass von allen Verfahren, insbesondere von allen spanabhebenden Verfahren, das Honen am Besten zur Nachbearbeitung der Oberfläche geeignet ist. Deswegen werden in einem weiteren Ausführungsbeispiel die Oberflächenschichten durch Honen nachbearbeitet.

In einem für die Praxis besonders wichtigen Ausführungsbeispiel ist die Kurbelwelle einer Brennkraftmaschine mit einer erfindungsgemäßen Lagervorrichtung ausgestattet. Beispielsweise kann in einem Reihensechszylinder - Motor die Kurbelwelle in vier radialen Gleitlagern, einem axialen Gleitlager und zwei radialen Wälzlagern gelagert sein. Weiterhin sind dann sechs Pleuelstangen an den sechs Kurbelzapfen der Kurbelwelle in sechs radialen Gleitlagern gelagert. Die Laufflächen der stationären Lagerteile der Gleitlager, in denen eine solche Kurbelwelle gelagert ist, sind dabei mit einer der speziellen erfindungsgemäßen Oberflächenschichten versehen, die z.B. eine Kupferbasisschicht ist.

Die Kurbelwelle ist in diesem Fall an den Laufflächen der fünf Gleitlagerstellen und an den Laufflächen der Kurbelzapfen mit einer anderen der speziellen Oberflächenschichten versehen, die z.B. eine Eisenbasisschicht ist. Weiterhin sind die Lagerstellen der Pleuelstangen für die Kurbelzapfen, also die Lagerstellen der Kurbelwelle für die Pleuelstangen, im Folgenden Pleuelaugen genannt, z.B. mit der Kupferbasisschicht versehen. Auch die Laufflächen der Innen- und Außenringe der zwei Wälzlager des weiter oben beispielhaft angeführten Reihensechszylinder - Motors, sind bei diesem Beispiel mit dieser Kupferbasisschicht versehen. Die Wälzelemente der Wälzlager hingegen, in ganz speziellen Ausführungsbeispielen auch z.B. Kugeln, Rollen, Kegel etc., sind hier mit der Eisenbasisschicht ausgestattet.

D.h. bei allen in diesem Ausführungsbeispiel genannten Lagervorrichtungen ist bei den miteinander in lagerndem Kontakt stehenden Lagerteilen die Paarung einer relativ harten Oberflächenschicht mit einer relativ weichen Oberflächenschicht realisiert. Durch diese erfindungsgemäßen Lagervorrichtungen kann z.B. auf den Einsatz von Lagerschalen verzichtet werden.

Bei speziellen Einsatzbedingungen, z.B. bei besonders hoher Beanspruchung, kann es unter Umständen erforderlich sein, trotzdem weiterhin Lagerschalen zu verwenden. In diesem Fall werden die Lagerschalen z.B. mit einer relativ weichen Oberflächenschicht versehen, z.B. mit der Kupferbasisschicht und das andere zu lagernde Lagerteil mit einer relativ harten Oberflächenschicht, z.B. mit der Eisenbasisschicht. Mit dieser erfindungsgemäßen Lagervorrichtung wird z.B. eine viel höhere Lebensdauer oder eine höhere Belastbarkeit erreicht, als mit den aus dem Stand der Technik bekannten Lagerschalen.

Im Folgenden wird die Erfindung anhand der Zeichnung näher erläutert. Es zeigen in schematischer, nicht maßstäblicher Darstellung:
- Fig. 1: eine erfindungsgemäße Gleit - Lagervorrichtung;
- Fig. 2: eine erfindungsgemäße Wälz - Lagervorrichtung;
- Fig.3: einen Ausschnitt einer erfindungsgemäßen Lagervorrichtung einer Kurbelwelle.

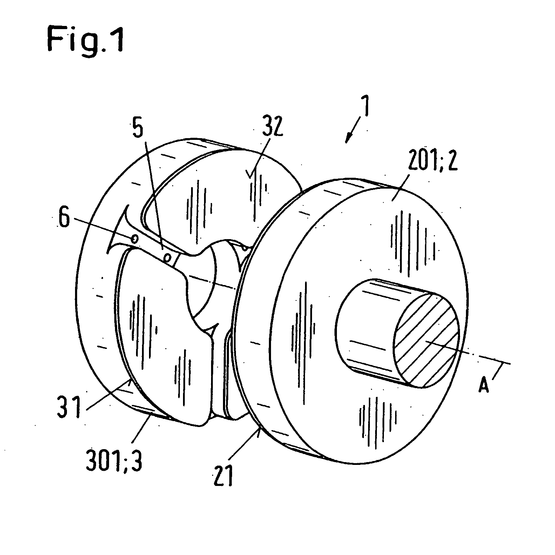

Fig. 1 zeigt in einer schematischen Darstellung eine erfindungsgemäße Gleit - Lagervorrichtung 1, die Kräfte in axialer Richtung, also in Richtung der Achse A, aufnehmen kann. Zu sehen ist eine das erste Lagerteil 2 in Form einer Welle mit Wellenabsatz 201. Auf diesem Wellenabsatz 201 befindet sich die Lauffläche mit der harten Oberflächenschicht 21. Die Welle 201 stützt sich im zusammengebauten Zustand ab auf der Lauffläche 32 des zweiten Lagerteils 3, hier in Form eines ölgeschmierten Stützlagers 301. Auf die Lauffläche 32 des Stützlagers 3 aufgebracht ist die weiche Oberflächenschicht 31. Weiterhin zu sehen sind die für Gleitlager typischen Ölnuten 5 und die Löcher 6 zur Ölzufuhr.

Im Betriebszustand werden eventuell- auftretende Verunreinigungen in die Kupfermatrix der weichen Oberflächenschicht 31 des zweiten Lagerteils 3, oder in die Kupferbereiche der harten Oberflächenschicht 21 des ersten Lagerteils 2 eingedrückt und können die Oberflächen der beiden Lagerteile nicht schädigen.

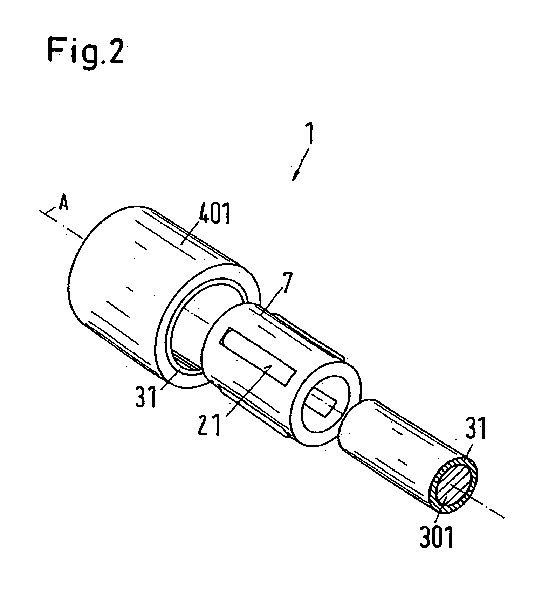

Fig. 2 zeigt in schematischer Darstellung ein Ausführungsbeispiel einer erfindungsgemäßen Lagervorrichtung 1 in Form eines Wälzlagers, welches hier als Nadelkranz 7 ausgestaltet ist. Die Lagervorrichtung 1 ist zur besseren Übersicht in Form einer Explosionszeichnung dargestellt. Prinzipiell kann ein Nadelkranz 7 zusammen mit allen Wellen und / oder Nadelhülsen verwendet werden, welche die passenden Abmessungen haben. Die z.B. vom Kugellager bekannten Innen- und Außenringe mit den Laufflächen entfallen hier in der Regel. Das zweite Lagerteil 3 ist hier realisiert durch die Welle 301 und die Nadelhülse 401. Das erste Lagerteil 2 ist hier ausgeprägt als Wälzkörper mit der eisenhaltigen Oberflächenschicht 21. Das zweite Lagerteil 3 ist mit der weichen Oberflächenschicht 31 versehen. Es versteht sich, dass auch das erste Lagerteil 2 mit der weichen Oberflächenschicht 31 versehen sein kann und das zweite Lagerteil 3 mit der eisenhaltigen Oberflächenschicht 21 versehen sein kann.

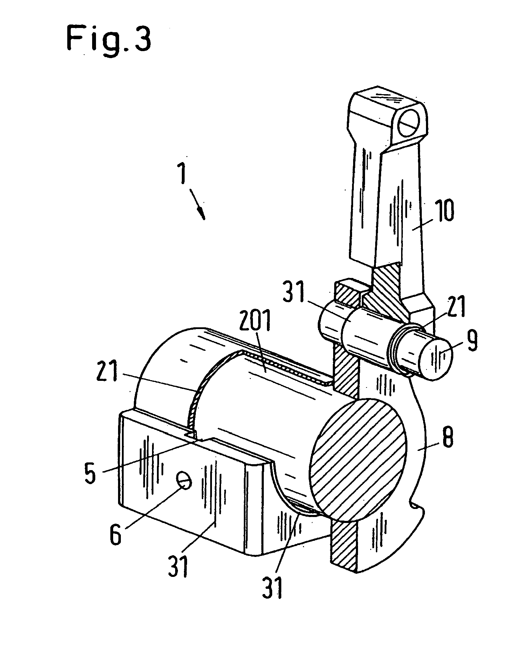

Fig. 3 zeigt ein anderes Ausführungsbeispiel einer erfindungsgemäßen Lagervorrichtung 1, welche für die Praxis von besonderer Bedeutung ist. Zur besseren Anschaulichkeit wurden Teile, wo es dienlich war, im Schnitt dargestellt. Gezeigt ist ein Ausschnitt einer erfindungsgemäßen Lagervorrichtung 1 einer Kurbelwelle 201. Der obere Teil der Lagervorrichtung 1 ist auch aus Gründen der Übersichtlichkeit nicht gezeigt. In dem gezeigten Ausschnitt ist die Kurbelwelle 201 mit der harten Oberflächenschicht 21 versehen und in dem radialen Gleitlager 301 gelagert. Das Gleitlager 301 ist mit der weichen Oberflächenschicht 31 versehen. Um eine Ölschmierung zu gewährleisten, ist in das zweite Lagerteil 3, also das Gleitlager 301, eine Ölnut 5 und Löcher 6 zur Ölzufuhr eingebracht. Weiterhin ist hier gezeigt eine Kurbel 8, ein Kurbelzapfen 9 und eine Pleuelstange 10. Die Kurbel 8 ist zum besseren Verständnis geschnitten dargestellt. In der Kurbel 8 befindet sich unter anderem der Kurbelzapfen 9, welcher an der Stelle der Gleitlagerung mit der Pleuelstange 10 mit der eisenhaltigen, harten Oberflächenschicht 21 versehen ist. Die Pleuelstange ist an dieser Lagerstelle mit der weichen, kupferhaltigen Oberflächenschicht 31 versehen. Auf weitere Details in der Zeichnung, wie etwa Bohrungen in der Kurbelwelle zur ölschmierung etc., wurde hier verzichtet.

Auch hier werden im Betriebszustand eventuell auftretende Verunreinigungen in die Kupfermatrix der weichen Oberflächenschicht 31 des zweiten Lagerteils 3, also des Gleitlagers 301, oder in die Kupferbereiche der harten Oberflächenschicht 21 des ersten Lagerteils 2, also der Kurbelwelle 201, eingedrückt und können die Oberflächen der beiden Lagerteile nicht schädigen. Dieser Prozess läuft natürlich analog für die Oberflächenschichten an der Lagerstelle der Pleuelstange ab.

Ein wichtiger Vorteil, der durch das Aufbringen der harten Oberflächenschicht 21 auf die Kurbelwelle 201 im Bereich des Gleitlagers 301 erreicht wird, ist darin zu sehen, dass wegen der harten Oberflächenschicht 21 auf das ohne diese Oberflächenschicht erforderliche gesonderte Härten (z.B. lnduktionshärten) der Kurbelwelle 201 in diesem Bereich verzichtet werden kann. In dem in Fig. 3 gezeigten Ausführungsbeispiel ist die harte Oberflächenschicht 21 auf einem Hubzapfen der Kurbelwelle 201 vorgesehen. In gleicher Weise kann diese harte Oberflächenschicht 21 auch auf den Lagerzapfen der Kurbelwellenhauptlager vorgesehen sein. Bei den aus dem Stand der Technik bekannten herkömmlichen Kurbelwellen, die die harten Oberflächenschichten 21 nicht aufweisen, ist es zur Vermeidung eines frühzeitigen Verschleißens erforderlich, die Lagerstellen der Kurbelwellen in einem aufwendigen separaten Arbeitsschritt zu härten. Dies erfolgt in der Regel durch Induktionshärten, was mit hohem Aufwand und hohen Kosten verbunden ist. Außerdem entstehen während der Induktionshärtung der Kurbelwelle Verzüge an den Lagersitzen. Um diese Verzüge zu kompensieren, müssen die Lagersitze mit hohem Aufmaß vor dem Härten hergestellt werden. Nach der Induktionshärtung werden die Lagersitzdurchmesser dann durch Schleifen (oder ähnliche spanabhebende Verfahren) auf Endmaß gebracht. Durch das erfindungsgemäße Aufbringen der harten Oberflächenschicht 21 an den Lagersitzen kann vorteilhaft auf das Induktionshärten an diesen Stellen verzichtet werden. Die vorgenannten Nachteile des Induktionshärtens werden somit vermieden, die Herstellung der Kurbelwellen erfolgt mit einem geringeren Energieaufwand. Es ist kein bzw. ein gegenüber dem Stand der Technik deutlich reduziertes Aufmaß an den Lagersitzen nötig, die Kurbelwelle unterliegt keinem Verzug und sie weist eine geringere Rissanfälligkeit auf als herkömmliche induktionsgehärtete Kurbelwellen.

Ein weiterer wichtiger Vorteil der Erfindung besteht darin, dass durch die Verwendung der erfindungsgemäßen Beschichtungen für die Lagervorrichtung auf Ölkanalbohrungen in der Kurbelwelle verzichtet werden kann. Bei den aus dem Stand der Technik bekannten Kurbelwellen sind Ölkanalbohrungen im Kurbelwellenkörper ausgebildet, die dazu dienen, eine bessere Schmierung der Haupt- und Hublager der Kurbelwelle zu erreichen. Der Ölfluss durch diese Bohrungen sorgt dafür, dass Öl auf der Oberfläche der Lager in ausreichender Menge verteilt wird, sodass eine Reibungs- und Verschleißreduzierung zwischen den Kontaktflächen der Lagerung erreicht wird. Die Herstellung der Ölkanalbohrungen ist mit einem hohen Aufwand und mit entsprechend hohen Kosten verbunden. Außerdem können die Ölkanalbohrungen zu einer Rissbildung führen und sie reduzieren die dynamische Festigkeit der Kurbelwelle.

Durch die gemäß der Erfindung vorgesehene Oberflächenschicht auf der Oberfläche der Haupt- und Hublager der Kurbelwelle wird eine ausreichende Reibungsreduzierung und Verschleißreduzierung der Lagerung erreicht, ohne dass zusätzlich Öl zur Reibungs- und Verschleißreduzierung über Ölkanalbohrungen auf die Lagerflächen transportiert werden müsste. Daher kann auf die separaten Ölkanalbohrungen in der Kurbelwelle verzichtet werden. Das Verzichten auf die Ölkanalbohrungen führt zwar zu einer Reduzierung der Ölschmierung der Haupt- und Hublager, jedoch wird dies durch die erfindungsgemäße Beschichtung der Lagerpartner kompensiert. Hierzu sind erfindungsgemäß besonders geeignete Werkstoffkombinationen vorgesehen, die geeignete tribologische Eigenschaften aufweisen, um auch ohne zusätzlich durch Ölkanalbohrungen herantransportiertes Öl eine ausreichend geringe Reibung und einen ausreichend geringen Verschleiß der Lagerpartner zu erreichen.

Die positiven Einflüsse einer herkömmlichen Ölschmierung mittels Ölkanalbohrungen auf das aus Lageroberfläche der Kurbelwelle und entsprechendem Gegenkörper bestehende tribologische System werden erfindungsgemäß durch gezielt gewählte Werkstoffe, die in Form von Oberflächenbeschichtungen aufgebracht werden, erreicht. Als Gegenkörper zu den Lagersitzen der Kurbelwelle können dabei aus zwei Halbschalen mit Weichlegierungen an ihrer Oberfläche, die in Form von Oberflächenschichten aufgebracht sind, bestehen. Alternativ können die Gegenkörper aber auch unmittelbar durch die entsprechenden Lagersitze der zu lagernden Bauteile, wie z.B. die inneren Oberflächen der Pleuelaugen, gebildet werden.

Durch die Verwendung der erfindungsgemäßen Oberflächenschichten an den einzelnen Lagerteilen kann nicht nur auf die Herstellung der Ölbohrungen selbst verzichtet werden, auch das Abgraten und das Polieren der Bohrungsenden entfällt. Weiterhin wird eine geringere Rissanfälligkeit und eine höhere dynamische Steifigkeit der Kurbelwelle erreicht.

## Patentansprüche

1. Lagervorrichtung mit einem ersten Lagerteil (2) und einem zweiten Lagerteil (3), die in lagerndem Kontakt zusammenwirken, wobei das erste Lagerteil (2) und das zweite Lagerteil (3) jeweils mit einer Oberflächenschicht (21, 31) versehen ist, wobei die Härte der Oberflächenschicht (21) des ersten Lagerteils (2) größer ist als die Härte der Oberflächenschicht (31) des zweiten Lagerteils (3), **dadurch gekennzeichnet, dass** die Oberflächenschicht (21) des ersten Lagerteils (2) eine eisenhaltige Oberflächenschicht (21) ist, welche mindestens folgende Zusammensetzung aufweist:
Kohlenstoff = 0.1 % bis 1.5% Gewichts-Prozent
Mangan = 0.1 % bis 8% Gewichts-Prozent
Schwefel = 0.1 % bis 2% Gewichts-Prozent
Kupfer = 0.1 % bis 12% Gewichts-Prozent
Eisen = Differenz auf 100% Gewichts-Prozent.

2. Lagervorrichtung nach Anspruch 1, wobei die Lagervorrichtung ein Kurbelwellenlager mit Pleuelstange (10) einer Brennkraftmaschine ist.

3. Lagervorrichtung nach Anspruch 1 oder 2, wobei die eisenhaltige Oberflächenschicht (21) zusätzlich 0.01% bis 0.2% Gewichts-Prozent Phosphor enthält.

4. Lagervorrichtung nach einem der Ansprüche 1 bis 3, wobei die eisenhaltige Oberflächenschicht (21) zusätzlich 5% bis 20% Gewichts-Prozent Chrom enthält.

5. Lagervorrichtung nach einem der Ansprüche 1 bis 4, wobei die eisenhaltige Oberflächenschicht (21) zusätzlich 0.1% bis 20% Gewichts-Prozent Molybdän enthält.

6. Lagervorrichtung nach einem der Ansprüche 1 bis 5, wobei in der eisenhaltigen Oberflächenschicht (21) MnS als Trockenschmierstoff enthalten ist und der Mangan Anteil zwischen 1 % und 2.5% Gewichts-Prozent, bevorzugt bei 1.7% Gewichtsprozent liegt und der Schwefelanteil zwischen 0.5% Gewichts-Prozent und 1.5% Gewichtsprozent, bevorzugt bei 1 % Gewichtsprozent liegt.

7. Lagervorrichtung nach einem der Ansprüche 1 bis 6, wobei die eisenhaltige Oberflächenschicht (21) eine Grundmatrix aus α - Eisen aufweist.

8. Lagervorrichtung nach einem der Ansprüche 1 bis 7, wobei die eisenhaltige Oberflächenschicht (21) Karbide, insbesondere FeₓCy, bevorzugt Fe₃C enthält.

9. Lagervorrichtung nach einem der Ansprüche 1 bis 8, wobei die eisenhaltige Oberflächenschicht (21) Kupferausscheidungen aufweist, die eine Kupfermatrix bilden.

10. Lagervorrichtung nach einem der Ansprüche 1 bis 9, wobei die eisenhaltige Oberflächenschicht (21) eine Porosität von 0.5% bis 5% Volumen-Prozent, insbesondere zwischen 1 % und 3% aufweist.

11. Lagervorrichtung nach einem der Ansprüche 1 und 2, wobei die Oberflächenschicht (31) des zweiten Lagerteils (3) eine kupferhaltige Oberflächenschicht (31) ist, welche mindestens folgende Zusammensetzung aufweist:
Zink = 5% bis 30% Gewichts-Prozent
Zinn = 1 % bis 10% Gewichts-Prozent
Silizium = 0.1 % bis 3% Gewichts-Prozent
Aluminium = 0.1 % bis 7% Gewichts-Prozent
Eisen = 0.01 % bis 2% Gewichts-Prozent
Mangan = 0.01 % bis 4% Gewichts-Prozent
Kobalt = 0.01 bis 3% Gewichtsprozent
Kupfer = Differenz auf 100% Gewichts-Prozent

12. Lagervorrichtung nach Anspruch 11, wobei die kupferhaltige Oberflächenschicht (31) zusätzlich 0.01 % bis 1 % Gewichts-Prozent Titan enthält.

13. Lagervorrichtung nach Anspruch 12, wobei die kupferhaltige Oberflächenschicht (31) eine Grundmatrix aus α - Kupfer aufweist.

14. Lagervorrichtung nach einem der Ansprüche 11 bis 13, wobei die kupferhaltige Oberflächenschicht (31) Ausscheidungen von Eisen und oder Kobalt und / oder Mangan und / oder Silizium aufweist.

15. Lagervorrichtung nach einem der Ansprüche 11 bis 14, wobei die kupferhaltige Oberflächenschicht (31) eine Porosität von 0.5% bis 5% Volumen-Prozent, insbesondere zwischen 1 % und 3% aufweist.

16. Lagervorrichtung nach einem der vorangehenden Ansprüche, wobei die kupferhaltige und / oder eisenhaltige Oberflächenschicht (31, 21) durch Honen nachbearbeitet ist.

17. Kurbelwelle mit Lagersitzen in Form von Hubzapfen für die Lagerung von Pleuelstangen und Hauptlagern für die Lagerung der Kurbelwelle gegenüber dem Motorgehäuse, wobei mindestens ein Lagersitz einen Teil einer Lagervorrichtung nach den Ansprüchen 1 bis 16 bildet, wobei dieser Lagersitz eine auf den ungehärteten Werkstoff der Kurbelwelle aufgebrachte eisenhaltige Oberflächenschicht (21) aufweist, welche mindestens folgende Zusammensetzung aufweist:
Kohlenstoff = 0.1 % bis 1.5% Gewichtsprozent
Mangan = 0.1 % bis 8% Gewichtsprozent
Schwefel = 0.1 % bis 2% Gewichtsprozent
Kupfer = 0.1 % bis 12% Gewichtsprozent
Eisen = Differenz auf 100% Gewichtsprozent.

18. Kurbelwelle nach Anspruch 17, **dadurch gekennzeichnet, dass** die Oberflächenschicht (21) eine Zusammensetzung gemäß den Ansprüchen 4 bis 11 aufweist.

19. Kurbelwelle nach den Ansprüchen 17 bis 18, **dadurch gekennzeichnet, dass** alle Hubzapfen und alle Hauptlager der Kurbelwelle mit der Oberflächenschicht (21) versehen sind und der Kurbelwellenkörper frei von Ölkanalbohrungen ist.

## Claims

1. Bearing device with a first bearing part (2) and a second bearing part (3) which cooperate in bearing contact, wherein the first bearing part (2) and the second bearing part (3) are each provided with a surface layer (21, 31), wherein the hardness of the surface layer (21) of the first bearing part (2) is greater than the hardness of the surface layer (31) of the second bearing part (3), **characterised in that** the surface layer (21) of the first bearing part (2) is an iron-containing surface layer (21) which comprises at least the following composition:
carbon = 0.1% to 1.5% by weight
manganese = 0.1% to 8% by weight
sulphur = 0.1% to 2% by weight
copper = 0.1% to 12% by weight
iron = to make up to 100% by weight.

2. Bearing device as claimed in Claim 1, wherein the bearing device is a crank shaft bearing with a connecting rod (10) of an internal combustion engine.

3. Bearing device as claimed in Claim 1 or 2, wherein the iron-containing surface layer (21) additionally contains 0.01% to 0.2% by weight of phosphorous.

4. Bearing device as claimed in any one of Claims 1 to 3, wherein the iron-containing surface layer (21) additionally contains 5% to 20% by weight of chromium.

5. Bearing device as claimed in any one of Claims 1 to 4, wherein the iron-containing surface layer (21) additionally contains 0.1% to 20% by weight of molybdenum.

6. Bearing device as claimed in any one of Claims 1 to 5, wherein the iron-containing surface layer (21) contains MnS as a dry lubricant and the manganese portion is between 1% and 2.5% by weight, preferably 1.7% by weight and the sulphur portion is between 0.5% by weight and 1.5% by weight, preferably 1% by weight.

7. Bearing device as claimed in any one of Claims 1 to 6, wherein the iron-containing surface layer (21) has a basic matrix of α-iron.

8. Bearing device as claimed in any one of Claims 1 to 7, wherein the iron-containing surface layer (21) contains carbides, in particular FeₓC_{y}, preferably Fe₃C.

9. Bearing device as claimed in any one of Claims 1 to 8, wherein the iron-containing surface layer (21) has copper deposits which form a copper matrix.

10. Bearing device as claimed in any one of Claims 1 to 9, wherein the iron-containing surface layer (21) has a porosity of 0.5% to 5% by volume, in particular between 1% and 3%.

11. Bearing device as claimed in any one of Claims 1 and 2, wherein the surface layer (31) of the second bearing part (3) is a copper-containing surface layer (31) which comprises at least the following composition:
zinc = 5% to 30% by weight
tin = 1% to 10% by weight
silicon = 0.1% to 3% by weight
aluminium = 0.1 % to 7% by weight
iron = 0.01% to 2% by weight
manganese = 0.01% to 4% by weight
cobalt = 0.01 to 3% by weight
copper = to make up to 100% by weight.

12. Bearing device as claimed in Claim 11, wherein the copper-containing surface layer (31) additionally contains 0.01% to 1% by weight of titanium.

13. Bearing device as claimed in Claim 12, wherein the copper-containing surface layer (31) has a basic matrix of α-copper.

14. Bearing device as claimed in any one of Claims I I to 13, wherein the copper-containing surface layer (31) comprises deposits of iron and/or cobalt and/or manganese and/or silicon.

15. Bearing device as claimed in any one of Claims 11 to 14, wherein the copper-containing surface layer (31) has a porosity of 0.5% to 5% by volume, in particular between 1 % and 3%.

16. Bearing device as claimed in any one of the preceding Claims, wherein the copper-containing and/or iron-containing surface layer (31, 21) is finished by honing.

17. Crank shaft with bearing seats in the form of crank pins for mounting connecting rods and main bearings for mounting the crank shaft with respect to the engine housing, wherein at least one bearing seat forms part of a bearing device as claimed in Claims 1 to 16, wherein this bearing seat comprises an iron-containing surface layer (21) applied to the non-hardened material of the crank shaft and comprising at least the following composition:
carbon = 0.1% to 1.5% by weight
manganese = 0.1 % to 8% by weight
sulphur = 0.1 % to 2% by weight
copper = 0.1% to 12% by weight
iron = to make up to 100% by weight.

18. Crank shaft as claimed in Claim 17, **characterised in that** the surface layer (21) comprises a composition in accordance with Claims 4 to 11.

19. Crank shaft as claimed in Claims 17 to 18, **characterised in that** all crank pins and all main bearings of the crank shaft are provided with the surface layer (21) and the crank shaft body has no oil channel bores.

## Revendications

1. Dispositif de palier avec une première partie de palier (2) et une seconde partie de palier (3), qui coopèrent en contact portant, la première partie de palier (2) et la seconde partie de palier (3) étant chacune pourvue d'une couche superficielle (21, 31), la dureté de la couche superficielle (21) de la première partie de palier (2) étant supérieure à la dureté de la couche superficielle (31) de la seconde partie de palier (3), **caractérisé en ce que** la couche superficielle (21) de la première partie de palier (2) est une couche superficielle (21) contenant du fer, qui présente au moins la composition suivante
Carbone = 0,1 % à 1,5 % en poids
Manganèse = 0,1 % à 8 % en poids
Soufre = 0,1 % à 2 % en poids
Cuivre = 0,1 % à 12 % en poids
Fer = solde pour atteindre 100 % en poids

2. Dispositif de palier selon la revendication 1, dans lequel le dispositif de palier est un palier de vilebrequin avec une bielle (10) d'un moteur à combustion.

3. Dispositif de palier selon la revendication 1 ou 2, dans lequel la couche superficielle (21) contenant du fer contient en outre 0,01% à 0,2 % en poids de phosphore.

4. Dispositif de palier selon l'une des revendications 1 à 3, dans lequel la couche superficielle (21) contenant du fer contient en outre 5 % à 20 % en poids de chrome.

5. Dispositif de palier selon l'une des revendications 1 à 4, dans lequel la couche superficielle (21) contenant du fer contient en outre 0,1 % à 20 % en poids de molybdène.

6. Dispositif de palier selon l'une des revendications 1 à 5, dans lequel la couche superficielle (21) contenant du fer contient du MnS en tant que lubrifient sec, et la quantité de manganèse se situe entre 1 % et 2,5 % en poids, de préférence aux environs de 1,7 % en poids, et la quantité de soufre se situe entre 0,5 % en poids et 1,5 % en poids, de préférence aux environ de 1 % en poids.

7. Dispositif de palier selon l'une des revendications 1 à 6, dans lequel la couche superficielle (21) contenant du fer présente une matrice de base en fer α.

8. Dispositif de palier selon l'une des revendications 1 à 7, dans lequel la couche superficielle (21) contenant du fer contient un carbure, en particulier FeₓC_{y}, de préférence Fe₃C.

9. Dispositif de palier selon l'une des revendications 1 à 8, dans lequel la couche superficielle (21) contenant du fer présente du cuivre précipité qui forme une matrice de cuivre.

10. Dispositif de palier selon l'une des revendications 1 à 9, dans lequel la couche superficielle (21) contenant du fer présente une porosité de 0,5 % à 5 % en volume, en particulier entre 1 % et 3 %.

11. Dispositif de palier selon l'une des revendications 1 et 2, dans lequel la couche superficielle (31) de la seconde partie de palier (3) est une couche superficielle (31) contenant du cuivre, qui présente au moins la composition suivante:
Zinc = 5 % à 30 % en poids
Etain = 1 % à 10 % en poids
Silicium = 0,1 % à 3 % en poids
Aluminium = 0,1 % à 7 % en poids
Fer = 0,01 % à 2 % en poids
Manganèse = 0,01 % à 4 % en poids
Cobalt = 0,01 % à 3 % en poids
Cuivre = solde pour atteindre 100 % en poids

12. Dispositif de palier selon la revendication 11, dans lequel la couche superficielle (31) contenant du cuivre contient en outre 0,01 % à 1 % en poids de titane.

13. Dispositif de palier selon la revendication 12. dans lequel la couche superficielle (31) contenant du cuivre présente une matrice de base en cuivre α.

14. Dispositif de palier selon l'une des revendications 11 à 13, dans lequel la couche superficielle (31) contenant du cuivre comprend du fer et/ou du cobalt et/ou du manganèse et/ou du silicium précipités.

15. Dispositif de palier selon l'une des revendications 11 à 14, dans lequel la couche superficielle (31) contenant du cuivre présente une porosité de 0,5 % à 5 % en volume, en particulier entre 1 % et 3 %.

16. Dispositif de palier selon l'une des revendications précédentes, dans lequel la couche superficielle (31, 21) contenant du cuivre et/ou contenant du fer est finie par rodage.

17. Vilebrequin avec des sièges de paliers sous la forme de tourillons pour le montage de bielles, et de paliers principaux pour le montage du vilebrequin par rapport au bloc moteur, au moins un siège de palier formant une partie d'un dispositif de palier selon les revendications 1 à 16, ce siège de palier présentant une couche superficielle (21) contenant du fer, déposée sur la matière non durcie du vilebrequin, laquelle présente au moins la composition suivante:
Carbone = 0,1 % à 1,5 % en poids
Manganèse = 0,1 % à 8 % en poids
Soufre = 0,1 % à 2 % en poids
Cuivre = 0,1 % à 12 % en poids
Fer = solde pour atteindre 100 % en poids

18. Vilebrequin selon la revendication 17, **caractérisé en ce que** la couche superficielle (21) présente une composition selon les revendications 4 à 11.

19. Vilebrequin selon les revendications 17 à 18, **caractérisé en ce que** tous les tourillons et tous les paliers principaux du vilebrequin sont pourvus de la couche superficielle (21), et le corps du vilebrequin est exempt d'alésages formant canaux à huile.
